# FASCICULE DE BREVET EUROPEEN

(11) **EP 1 788 036 B1**
(45) Date de publication et mention de la délivrance du brevet: **28.09.2011**
(21) Numéro de dépôt: 05111790.1
(22) Date de dépôt: 07.12.2005
(51) Int. Cl.: C09B 67/02, G01N 21/64

(54) **Procédé de réalisation d'agrégats J**
Verfahren zur Herstellung von J-Aggregaten
Process for the preparation of J-aggregates

(30) Priorité: 16.11.2005 CH 183805
(43) Date de publication de la demande: 23.05.2007
(73) Titulaire: CSEM Centre Suisse d'Electronique et de Microtechnique SA - Recherche et Développement, 2002 Neuchâtel (CH)
(72) Inventeur: Losson, Myriam, 2035, Corcelles (CH); Pugin, Raphaël, 2012, Auvernier (CH); Steiger, Rolf, 1724, Le Mouret (CH); Monnier, Véronique, 2300, La Chaux-de-Fonds (CH); Kunz, Rino E., 8704 Herrliberg (CH); Stanley, Ross, 1005 Lausanne (CH)
(74) Mandataire: GLN

(56) Documents cités:
- EP-A- 1 081 557
- EP-A1- 1 085 315
- M. LOSSON: "Self-organizing properties of dendrimers and potential applications; Thèse pur l'obtention du titre de Docteur ès Sciences" 24 octobre 2005 (2005-10-24), UNIVERSITÉ DE NEUCHATEL; FACULTE DES SCIENCES , NEUCHATEL , XP002417620 * le document en entier *
- HIDEO TOKUHISA ET. AL.: "Preparation and Characterization of Dendrimer Monolayers and Dendrimer-Alkanethiol Mixed Monolayers Adsorbed to Gold" JOURNAL OF THE AMERICAN CHEMICAL SOCIETY, vol. 120, 1998, pages 4492-4501, XP002417618
- R. STEIGER; F. ZBINDEN: "Physical-Chemical Properties of Organized Sensitizer Molecules" JOURNAL OF IMAGING SCIENCE, vol. 32, 1988, pages 64-81, XP008074432

## Description

### Domaine technique

La présente invention se rapporte au domaine de la nanotechnologie, et concerne, plus spécialement, des assemblages supramoléculaires particuliers de colorants, notamment de la famille des cyanines, appelés agrégats J. Particulièrement, l'invention concerne un procédé permettant de réaliser très simplement de tels agrégats J. Elle concerne aussi un ensemble comprenant une couche d'agrégats J, et des dispositifs optiques mettant en application des agrégats J obtenus selon le procédé de l'invention.

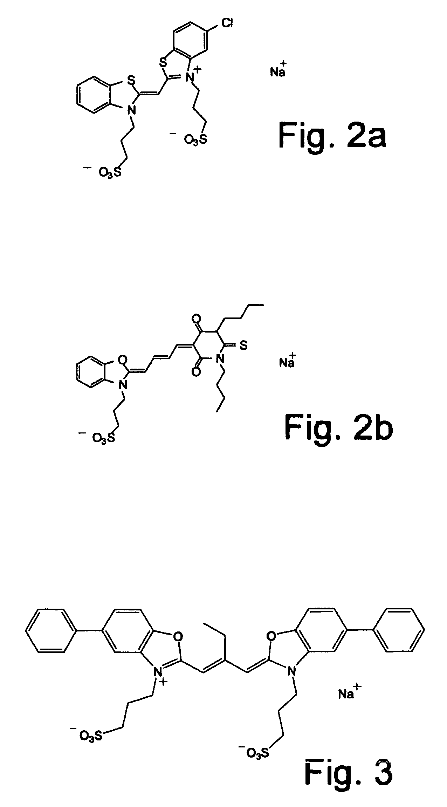

Dans le présent document, le terme de cyanines englobera aussi bien les cyanines que les méro-cyanines et leurs dérivés, tels que définis dans l'article de D. M. Sturmer paru dans le livre "Chemistry of heterocyclic compounds: special topics", volume 30, pp 441-601, édité par A. Weissberger and B.W. Rossiter, 1977 (Wiley Interscience, New York), et dont des exemples de structure sont donnés respectivement aux figures 2a et 2b, 3, 9, 10 et 14.

Les agrégats J sont des auto-arrangements de molécules de cyanines qui forment des assemblages très ordonnés et dont les organisations structurelles sont de type cristallin. Une description des agrégats J et de leurs propriétés peut être trouvée dans l'article par H Kuhn et al. dans un livre intitulé "J-aggregates" par T. Kobayashi, ISBN 981-02-2737-X. Du fait de l'organisation quasiment sans défaut des agrégats J, ils présentent des propriétés remarquables. Ainsi, il a été observé que l'irradiation d'une monocouche bidimensionnelle d'agrégats J entraîne la formation d'un exciton qui est capable de se propager dans l'ensemble de cette monocouche à une vitesse élevée, typiquement 2 km/s, de manière cohérente et avec extrêmement peu de perte d'énergie.

### Etat de la technique

Les étonnantes propriétés des agrégats J ont été observées pour la première fois dans les années 1930. Depuis, de nombreuses applications ont été proposées à titre expérimental, démontrant l'étendue des possibilités offertes par les agrégats J. Par exemple, on peut citer des systèmes de concentration de lumière pour des dispositifs et des capteurs solaires, des composants pour des systèmes optiques non-linéaires, des systèmes d'enregistrement optique rapide, etc....

Cependant, ces différentes applications sont, pour l'instant, restées au niveau expérimental. En effet, il est très difficile de parvenir à organiser des monomères de cyanines de manière à ce qu'ils forment des agrégats J sans défaut et en monocouche et ce, de manière reproductible. A la connaissance de la demanderesse, il n'existe aucune technique qui permette de réaliser ces agrégats de manière suffisamment simple, rapide et reproductible pour permettre une mise en oeuvre industrielle.

Parmi les nombreuses techniques essayées jusqu'ici et publiées dans la littérature, on citera celle de Langmuir-Blodgett (voir à ce propos l'article de R. Steiger et F. Zbinden dans Journal of Imaging Science, vol. 32, 1988, p. 64), qui consiste à remplir d'eau ultra-pure une cuve de téflon dotée d'une barrière mobile disposée à la surface du liquide. Des molécules de cyanines amphiphiles sont déposées à la surface et la barrière est déplacée très lentement jusqu'à ce que ces molécules forment une monocouche ordonnée à la surface du liquide. Selon ce procédé, il est possible que le film ainsi obtenu puisse être transféré sur un support, par capillarité. Bien évidemment, on comprend que cette technique est très délicate et lente et qu'elle ne peut être reproduite pour fournir des agrégats J en quantité industrielle. Toutefois, elle permet d'obtenir des agrégats J de très haute qualité, c'est-à-dire dont l'organisation ne présente quasiment aucun défaut. Ainsi, les caractéristiques physico-chimiques des agrégats J réalisés par cette méthode peuvent être considérés comme des références.

Dans une approche différente et plus récente, on a essayé de déposer des molécules de cyanines sur des supports formant des "matrices modèles" qui permettent de guider et de contrôler le phénomène d'agrégation des molécules. Le terme anglais "template" est couramment utilisé par l'homme du métier pour qualifier ce type de matrice. Ainsi, des supports à base de polymères, de bio-polymères, de polysavon, de micelles, d'acides polyacryliques, de liposomes ou d'alginates ont été testés, mais sans succès. En effet, les agrégats obtenus sont mal définis, dans le sens où l'ordre de l'arrangement n'est pas garanti à l'échelle moléculaire, et soit comportent plusieurs couches, soit sont instables.

La présente invention a pour but de proposer un procédé simple, rapide et efficace, permettant d'obtenir de manière reproductible des agrégats J stables et de haute qualité, c'est-à-dire dont les caractéristiques physico-chimiques sont comparables aux valeurs de référence.

### Divulgation de l'invention

De manière plus précise, l'invention concerne un procédé de réalisation d'agrégats J, comprenant les étapes suivantes:
i. se doter d'un support préalablement nettoyé,
ii. déposer sur le support une solution de molécules dendrimères susceptibles d'interagir avec lui pour former une monocouche présentant, sur sa face externe, une structure régulière et organisée, et
iii. recouvrir l'ensemble obtenu avec une solution de cyanines réagissant avec lesdites molécules dendrimères pour s'auto-arranger en agrégats J.

L'invention concerne également un ensemble formé d'un support, d'une couche organisée de molécules dendrimères et, sur la couche organisée de ces molécules, une monocouche de molécules de la famille des cyanines organisées en agrégats J.

### Brève description des dessins

L'invention sera mieux comprise à la lecture de la description qui suit, faite en référence aux dessins annexés dans lesquels:
- la figure 1 représente la structure d'un dendrimère (PAMAM) de génération 4 (G4),
- les figures 2a et 2b donnent, respectivement, un exemple de cyanines et de méro-cyanines,
- la figure 3 montre la structure de la Myline 1,
- les figures 4a et 4b comparent, respectivement, les spectres d'absorption de la Myline 1 à différentes concentrations et d'agrégats J de Myline 1,
- la figure 5 fournit les spectres d'absorption et d'émission d'agrégats J de Myline 1 sur une matrice de PAMAM G4,
- la figure 6 présente les spectres d'absorption d'agrégats J sur des matrices de PAMAM G1, G4 et G6, réalisés juste après et 14 semaines après la formation des agrégats J,
- la figure 7 propose des spectres d'absorption comparés d'agrégats J formés sur des matrices de PAMAM G4 et sur des matrices de polylysine,
- la figure 8 présente des spectres d'absorption d'agrégats J sur des matrices de PAMAM G1, G4 et G6,
- la figure 9 montre la structure de la Myline 2,
- la figure 10 montre la structure d'une cyanine de type cation,
- la figure 11 illustre l'influence de la température de réaction sur la qualité des agrégats J obtenus, en montrant des spectres d'absorption d'agrégats J formés à différentes températures et déposés, en a, sur du PAMAM G4, et en b, sur du PAMAM G6,
- la figure 12 présente les spectres d'absorption d'une couche d'agrégats J obtenus selon l'invention en fonction du temps d'immersion dans la solution de Myline lors de l'étape de formation des agrégats J,
- la figure 13 est un spectre comparé des émissions de fluorescence d'agrégats J de Myline 1, après que ceux-ci aient été mis en contact avec des solutions de paraquat de concentrations variées,
- la figure 14 montre la structure d'une molécule acceptrice d'énergie,
- la figure 15 est un schéma d'un dispositif muni d'une source de lumière primaire et d'une source de lumière secondaire, selon l'invention, et
- les figures 16 et 17 présentent plusieurs variantes d'un dispositif comportant une source de lumière secondaire selon l'invention.

Les différents spectres présentent l'absorption ou l'émission, en fonction de la longueur d'onde incidente ou émise.

### Mode(s) de réalisation de l'invention

Un exemple de procédé de réalisation d'un agrégat J particulier va être décrit en détail ci-après, à titre d'illustration non limitative de l'invention. Comme on le comprendra, le procédé consiste essentiellement à revêtir un support préalablement préparé d'une matrice modèle, puis à déposer, sur cette matrice, les molécules de cyanines pour former l'agrégat J.

### Préparation du support

Un support en verre, de type borosilicate, formant une plaque d'environ 3cm sur 1cm, est nettoyé, par exemple, par immersion dans une solution dite Piranha composée de H₂SO₄ et de H₂O₂, dans une proportion de 2 pour 1, à 120°C, pendant 10 minutes. Puis, le support est rincé avec de l'eau ultra pure et séché sous un courant d'azote. Le support est ensuite activé par un traitement avec un plasma d'oxygène, pendant 3 minutes. Ce plasma est créé entre deux plaques de condensateur, par induction d'un courant radiofréquence à travers les plaques. Les particules hautement énergétiques du plasma dégradent les éventuels résidus organiques subsistant sur le support en molécules volatiles qui s'évacuent. Le support est ainsi parfaitement nettoyé et est prêt pour les étapes suivantes.

### Dépôt de la matrice modèle ("template")

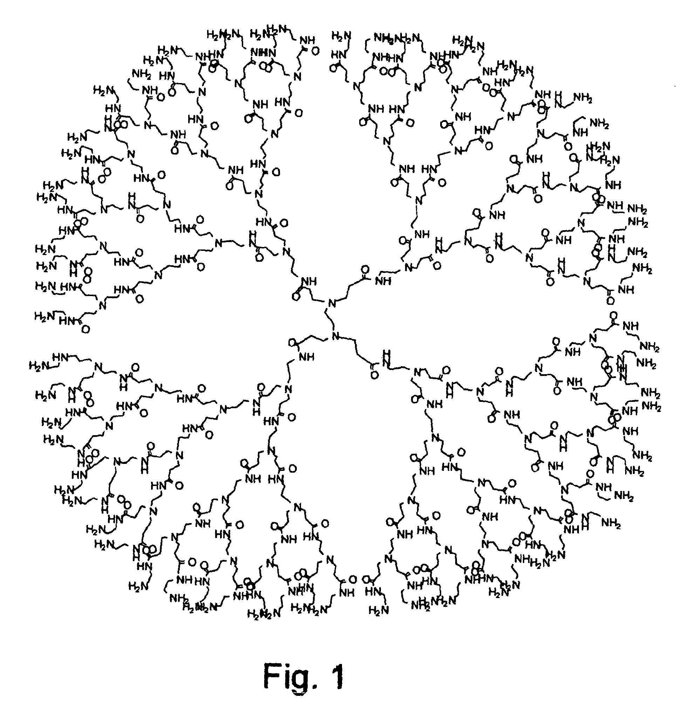

Typiquement, une matrice modèle est réalisée à base de dendrimères, c'est-à-dire de macromolécules constituées, chacune, de monomères qui s'associent selon un processus arborescent autour d'un coeur central plurifonctionnel. La construction arborescente s'effectue par la répétition d'une même séquence de réactions jusqu'à l'obtention à la fin de chaque cycle réactionnel d'une nouvelle génération et d'un nombre croissant de branches identiques. Un exemple de dendrimère, du Polyamidoamide de quatrième génération, dénommé PAMAM G4, est représenté à la figure 1.

Les dendrimères présentent l'avantage d'être monodisperses et de présenter une structure, une géométrie et une stoechiométrie rigoureusement contrôlées. En effet, le schéma réactionnel de leur préparation étant clairement défini, chacune des molécules d'un dendrimère donné est identique à une autre. Pour une molécule de dendrimère, le nombre de fonctions, la densité de charges, la surface et le volume occupé sont connus. Le tableau ci-après donne quelques exemples de dendrimères ainsi que leurs propriétés.

| | Nombre de fonctions périphériques | Diamètre (nm) | Surface externe (nm²) | Densité de surface des groupes fonctionnels (par nm²) |
|---|---|---|---|---|
| PAMAM G1 | 8 | 2.2 | 3.8 | 2.11 |
| PAMAM G4 | 64 | 4.5 | 15.9 | 4.02 |
| PAMAM G6 | 256 | 6.7 | 35.2 | 7.26 |

Le support préparé lors de l'étape précédente est plongé, pendant 18 heures, dans une solution éthanolique de PAMAM G4 concentrée à 1.10⁻⁴M. Grâce aux interactions entre le support et le PAMAM, celui-ci est adsorbé à la surface du support pour former sur ce dernier une monocouche homogène (voir, en particulier, l'article de H. Tokuhisa et al. J. Am. Chem. Soc., 1998, 120, 4492).

Dans l'exemple présenté, les réactions entre le PAMAM et le support sont de type acido-basique, entre les fonctions amines du PAMAM et les groupes silanols du verre, mais d'autres types d'interactions (électrostatiques, liaisons de Van der Waals, de type métal-ligand, etc....) peuvent également être mis en jeu, selon les différents supports choisis, comme il sera expliqué ci-après. Par ailleurs, d'autres techniques de dépôt peuvent être utilisées pour obtenir une monocouche homogène. Parmi ces techniques on peut citer : le "spin coating" ou dépôt sur un échantillon tournant, l'impression, le "spraying" ou pulvérisation, etc.

Puis, le support est rincé avec de l'éthanol pur afin d'éliminer les molécules de PAMAM non liées au support. Enfin, le support est séché sous un courant d'azote.

On obtient ainsi un ensemble composé d'un support, en verre en l'espèce, recouvert d'une monocouche régulière de dendrimères, du PAMAM selon l'exemple.

### Formation d'agrégats J

La cyanine utilisée pour former l'agrégat J est la [5, 5'-diphenyldibenzoxazolo N, N'-propylsulfonate]-9 ethyl trimethine cyanine (appelée Myline1), illustrée sur la figure 3. Ces cyanines étant sensibles à la lumière, il faut absolument éviter de les exposer à la lumière, tant lors de la préparation du réactif que lors de la réaction. La cyanine est mise en solution dans de l'acétone à une concentration de 7.10⁻⁴M. Le mélange est agité magnétiquement pendant 2 heures pour garantir la solubilisation totale du réactif.

La cyanine proposée est chargée négativement. Aussi, pour lui permettre d'interagir avec le PAMAM déposé sur le support, celui-ci est préalablement immergé dans une solution acide, typiquement de l'acide chlorhydrique à pH 3,5 afin de protonner toutes les amines du PAMAM. Le support ainsi activé est ensuite plongé dans la solution de cyanine ci-dessus. La durée de l'immersion est comprise entre quelques secondes et quelques minutes, et sera discutée ci-après. Ensuite, le support est rincé par de l'acétone pur et séché sous un courant d'azote.

On obtient ainsi un ensemble composé d'un support, en verre en l'espèce, recouvert d'une monocouche régulière de dendrimères, du PAMAM selon l'exemple, et d'une monocouche d'agrégats J.

Résultats

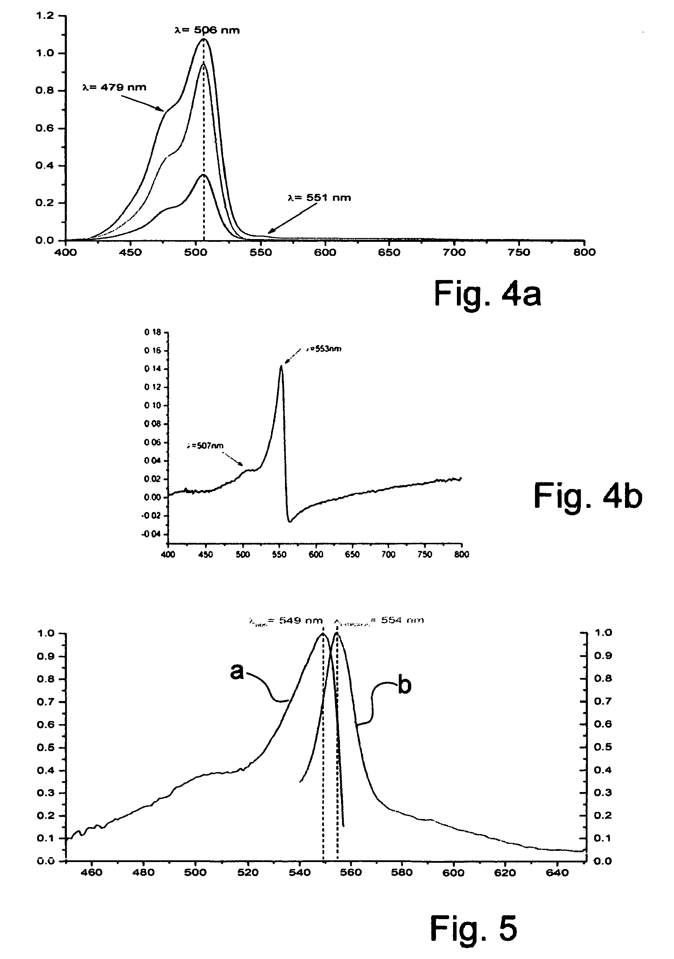

L'ensemble obtenu ci-dessus, particulièrement la couche de cyanines, est analysé au moyen d'un spectrophotomètre UV-visible. Le spectre obtenu avec une durée d'immersion de 12 minutes est présenté à la figure 4b, à comparer avec celui de la solution de Myline 1 utilisée comme réactif illustré sur la figure 4a.

L'étude de ce spectre (figure 4a) montre trois pics pour le réactif, à 479nm, 506nm et 551 nm, décrits dans la littérature comme correspondant respectivement aux pics d'absorption du dimère, du monomère et de l'agrégat J de Myline 1. Le spectre de la couche de Myline 1 déposée sur le support montre qu'il n'y a plus de dimère (absence de pic à 479nm) et presque plus de monomère (faible pic à 507nm). En revanche, le signal correspondant à l'agrégat J est très intense, ce qui signifie que la couche est presque exclusivement constituée d'agrégats J. Les longueurs d'onde du pic d'agrégat J obtenues selon le procédé ci-dessus et pour des échantillons de référence obtenus par la technique de Langmuir-Blodgett concordent de manière remarquable, attestant ainsi de la régularité et de la qualité, c'est-à-dire la haute organisation et la grande homogénéité, de l'agrégat J produit.

La qualité de l'organisation et de l'homogénéité des agrégats J formés est confirmée par la comparaison des longueurs d'onde d'émission de fluorescence et d'absorption de l'ensemble obtenu ci-dessus. Le spectre est présenté sur la figure 5. Le pic d'absorption a apparaît à une longueur d'onde de 549 nm, tandis que celui d'émission b apparaît à 554nm. Ce faible écart montre que la couche est homogène et parfaitement organisée à l'échelon moléculaire.

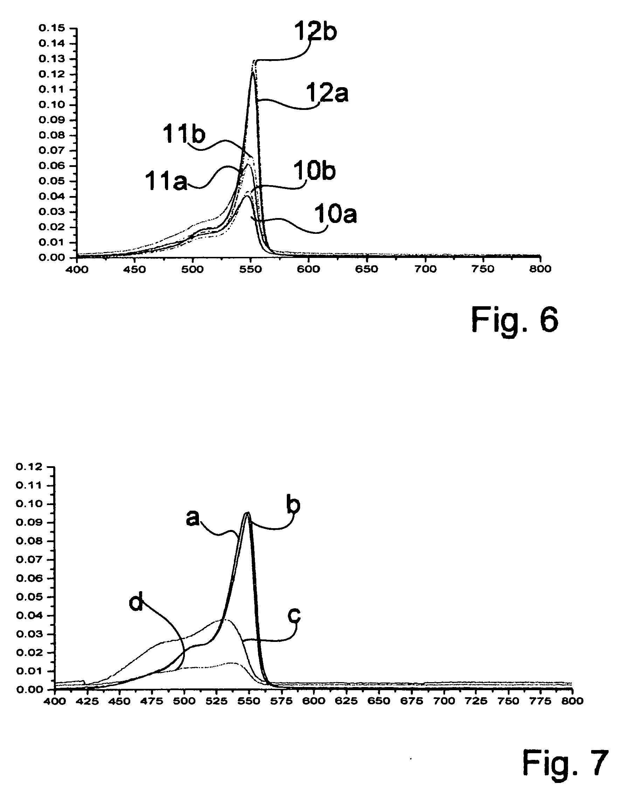

Un paramètre important, qui indique que le procédé décrit ci-dessus apporte un progrès important en vue de pouvoir appliquer industriellement les agrégats J, est la stabilité dans le temps des agrégats formés. La figure 6 présente les variations d'absorption pour un ensemble obtenu selon l'invention, avec un support en verre recouvert de PAMAM de différentes générations, respectivement G1, G4 et G6 pour les spectres 10, 11 et 12. Entre les différentes mesures, les échantillons ont été conservés dans l'obscurité. Les spectres indicés a sont obtenus juste après la réaction, tandis que les spectres indicés b ont été réalisés 14 semaines plus tard. On observe que, en absence de lumière, les agrégats J obtenus selon le procédé de l'invention, restent remarquablement organisés et même, que l'intensité des pics augmente légèrement. On peut penser que cet effet est dû à l'élimination de traces de solvant encore présentes juste après la réaction.

Pour démontrer l'efficacité et l'intérêt de l'utilisation d'un dendrimère par rapport à un polymère, un support de verre a été recouvert d'une couche de polylysine. Ce polymère comporte un grand nombre de fonctions amines et sa capacité à auto-arranger les molécules de Myline 1 en agrégats J peut donc être comparée avec celle observée pour le PAMAM. L'ensemble formé par un support de verre et une couche de polylysine subit le traitement décrit dans le paragraphe précédent relatif à la formation d'agrégats J.

La figure 7 représente les spectres d'absorption UV d'une couche de Myline 1 déposées dans les conditions suivantes:
- a: déposée sur une couche de PAMAM G4, spectre effectué avant le dernier rinçage;
- b: déposée sur une couche de PAMAM G4, spectre effectué après le dernier rinçage réalisé à l'acétone;
- c: déposée sur une couche de polylysine, spectre effectué avant le dernier rinçage;
- d: déposée sur une couche de polylysine, spectre effectué après le dernier rinçage réalisé à l'eau.

La figure 7 montre que, avec une couche de polylysine, le pic d'absorption correspondant à l'agrégat J est mal défini (entre 530 et 544nm), moins intense et beaucoup plus large qu'avec une couche de PAMAM. De plus, le spectre d illustre que les molécules de cyanines ne sont pas stables sur la couche de polylysine et qu'elles se réorganisent sur cette surface. A contrario, ce comparatif prouve que les matrices de dendrimères, et en particulier celles fonctionnalisées avec le PAMAM, présentent une excellente capacité à auto-arranger les molécules de cyanines en agrégats J stables et hautement organisés et, par conséquent, aux propriétés optiques très proches des propriétés de référence.

D'autres tests comparatifs avec différents poids moléculaires des polymères de polylysine ont été menés, également avec différentes concentrations de cyanines en tant que réactif, sans présenter de meilleurs résultats.

### Variantes au niveau du support

D'autres supports ont été utilisés pour recevoir une couche de dendrimères. Notamment, des couches d'or ayant subi une activation par plasma d'oxygène, telle que décrite ci-dessus.

Une couche de PAMAM est déposée selon le procédé décrit plus haut à propos d'un support de verre. Dans un solvant de type alcool de faible poids moléculaire (éthanol, méthanol, ...), le PAMAM adhère avec la surface d'or essentiellement grâce aux interactions entre les amines primaires périphériques du PAMAM et les atomes d'or de la surface. Le grand nombre de ces amines primaires permet d'obtenir une très bonne adhérence du PAMAM sur le support en or. Dans un solvant aqueux, la nature des interactions entre le PAMAM et l'or est très différente et est essentiellement contrôlée par des attractions électrostatiques. En effet, dans ces conditions, les groupements amines périphériques ont tendance à se protonner, chargeant positivement le PAMAM.

D'autres types de support peuvent encore être envisagés, tels que du silicium, du mica, du quartz ou des oxydes métalliques, notamment, ou même des supports souples de type polymère ou polycarbonate. L'essentiel étant que des interactions suffisantes puissent s'établir entre le support et la couche de dendrimères et que ces interactions soient de nature à permettre la création d'une monocouche de dendrimères sur le support. L'homme du métier sera à même, au moyen de simples expériences, d'établir d'autres associations entre des supports et des dendrimères, en faisant varier les groupes fonctionnels du dendrimère ou les conditions expérimentales du dépôt de la monocouche. Il convient également de noter la possibilité d'avoir une couche intermédiaire d'accrochage entre le support et la monocouche de dendrimères. Un exemple d'une telle couche intermédiaire peut être trouvé dans l'article de M. Wells et R. M. Crooks, J. Am. Chem. Soc. 1996, 118, 3988-3989.

### Variantes au niveau de la matrice modèle

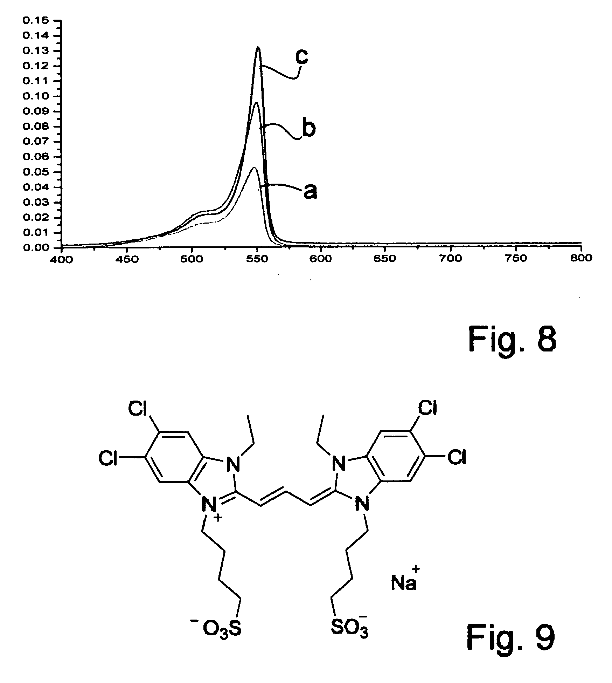

Différents dendrimères ont été utilisés et peuvent convenir à l'application visée. Notamment, pour un dendrimère de type PAMAM, les générations 1, 4 et 6 ont été testées, permettant d'obtenir, en reproduisant le procédé décrit ci-dessus, les spectres d'absorption a, b, c, respectivement, représentés à la figure 8. Il ressort de ce comparatif que les générations plus élevées de dendrimères permettent d'obtenir un meilleur résultat, sans doute grâce au fait qu'elles présentent une plus haute densité de groupes fonctionnels en périphérie. Ainsi, il est probable que des PAMAM de générations supérieures à 6, notamment jusqu'à la génération 10 au moins, offrent d'excellents résultats.

De manière plus générale, divers types de PAMAM peuvent être utilisés, qu'ils soient chargés positivement ou négativement. D'autres dendrimères, tels que des PAMAM G3.5, G4.5, ... , Gm.5, ... avec des fonctions périphériques carboxyliques (COOH) ou carboxylates (COO-), forment également des matrices permettant à des cyanines de s'auto-arranger en agrégats J. La caractéristique essentielle que doit présenter la molécule formant la matrice modèle est que sa surface extérieure, c'est-à-dire celle formant l'interface avec le milieu réactionnel lorsqu'elle est sur le support, doit être définie et régulière. Elle doit, en outre, disposer d'une haute densité de groupes fonctionnels périphériques pour interagir efficacement avec le support afin d'y être adsorbée mais aussi pour réagir avec des colorants pour leur permettre de s'auto-organiser librement. L'homme du métier saura faire les expérimentations nécessaires pour tester de manière large des macromolécules hyperbranches, comprenant des dendrimères, mais aussi des polymères hyperbranches, c'est-à-dire des molécules comportant une partie de type polymère, faiblement organisée, et une partie de type dendrimère, bien définie. De tels polymères hyperbranches peuvent convenir dans la mesure où la partie polymère est utilisée pour lier cette molécule au support, la partie dendrimère étant alors à l'interface avec les molécules de colorants. Dans le cadre de la présente invention de tels polymères hyperbranches sont réputés faire partie de la famille des dendrimères.

### Variantes au niveau des cyanines

Les différents colorants englobés dans la définition de la famille des cyanines donnée ci-dessus, c'est-à-dire les cyanines, les méro-cyanines et leurs dérivés, sont susceptibles de s'auto-arranger pour former des agrégats J sur une matrice modèle telle que définie aux paragraphes précédents. Bien entendu, la cyanine et la molécule formant la matrice modèle doivent être choisies l'une en fonction de l'autre pour que la cyanine interagisse avec les groupes fonctionnels présents à la périphérie de la matrice modèle ; ce qui implique, par exemple, une complémentarité des charges électriques et une similitude des densités de charges.

La [5,5'-tétrachloro1,1'diéthyle-dibenzoxazolo-N-N'-propionatebutylsufonate] triméthine cyanine, appelée Myline 2 et représentée sur la figure 9, a été déposée sur une matrice modèle en PAMAM G4, déposée sur un support en or. La Myline 2 a été utilisée sous forme anionique, en solution dans de l'acétone à 7.10⁻⁴M. Le PAMAM ayant été protonné, ainsi que décrit ci-dessus, la matrice modèle est plongée 3 minutes dans la solution de Myline 2. La formation d'agrégats J a été observée, confirmée par la présence d'un pic d'absorption à 586nm.

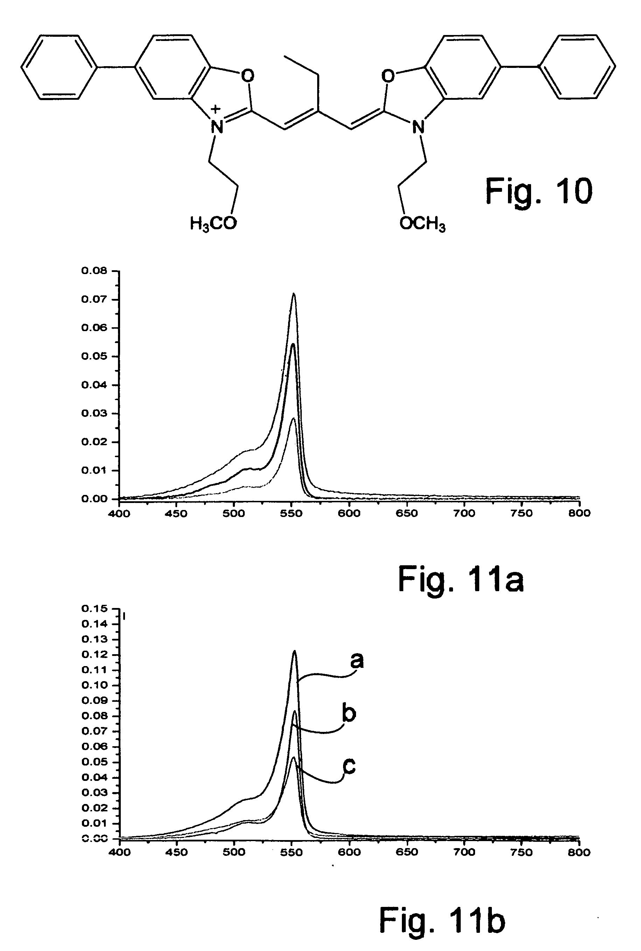

De manière analogue, une cyanine de type cation peut également s'auto-arranger pour former des agrégats J sur une matrice modèle chargée négativement. Un exemple d'une telle cyanine est illustré à la figure 10 alors qu'un dendrimère chargé négativement peut, par exemple, être un PAMAM de génération, Gm.5 avec fonctions périphériques carboxylates.

### Variantes au niveau des solvants

Les solvants interviennent à deux étapes du procédé réactionnel. Tout d'abord, le dendrimère est dissous dans un premier solvant. Comme déjà évoqué ci-dessus, ce premier solvant est, de préférence, un alcool de faible poids moléculaire, notamment du méthanol ou de l'éthanol.

Ensuite, le colorant est dissous dans un deuxième solvant. Dans l'exemple, ce dernier est de l'acétone. Des expériences menées avec un mélange d'acétone et d'éthanol, notamment un mélange 1:1, ont donné de bons résultats.

### Optimisation des conditions expérimentales

Les nombreuses expériences qui ont été menées pour tester différentes variantes susceptibles d'être mises en oeuvre dans le procédé selon l'invention ont permis d'identifier certains paramètres permettant soit d'obtenir des agrégats J de qualité supérieure, soit de faciliter le procédé en lui-même. Il est bien entendu que les paragraphes qui suivent donnent des sélections mais ne constituent pas des limitations visant à exclure les éléments ou domaines qui ne seraient pas compris dans ces sélections.

Ainsi, il apparaît que la solution de cyanines utilisée lors de la formation d'agrégats J donne une meilleure conversion des molécules de cyanines en agrégats J si la concentration en cyanines est suffisante, c'est-à-dire voisine de la saturation, de manière à permettre la formation de noyaux d'agrégats J dans la solution, qui vont agir comme germes dans le processus ultérieur de croissance de l'agrégat J. La valeur du seuil de saturation dépend bien sûr du solvant utilisé et de la nature de la cyanine considérée. Avec de l'acétone comme solvant et la cyanine Myline 1, il est donc souhaitable que la concentration soit égale ou supérieure à 7.10⁻⁵M.

L'étape de formation d'agrégats J a été menée en portant la solution de cyanines à différentes températures, soit à température ambiante (22°C), à 40°C et à 55°C. Ces différents essais ont été reproduits avec une matrice modèle réalisée à base de PAMAM G4 et de PAMAM G6. Les spectres d'absorption obtenus sont représentés sur les figures 11a et 11b, respectivement pour le PAMAM G4 et le PAMAM G6. Les courbes a, b, c correspondent aux températures 22, 40 et 55 °C.

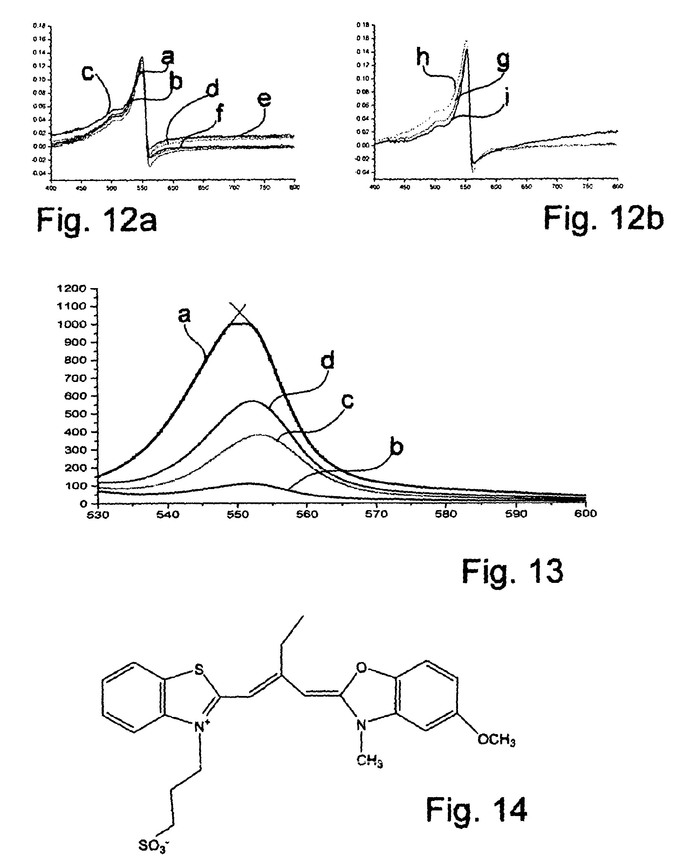

L'influence de la durée de l'immersion du support recouvert de la matrice modèle dans la solution de cyanines lors de l'étape de formation d'agrégats J a aussi été explorée. Des durées variant de 15 secondes à 12 minutes ont été testées, avec un support d'or recouvert d'une couche de PAMAM G4, acidifié et plongé dans une solution d'acétone contenant de la Myline 1 à 7.10⁻⁴M. Les spectres obtenus sont représentés sur la figure 12. Les spectres a, b, c, d, e, f, g, h, et i correspondent, respectivement, à des durées de 15, 30 45, 60, 90, 180 secondes, 6, 9 et 12 minutes. Ils montrent qu'un pic correspondant à la formation d'agrégats J peut déjà être observé après seulement 15 secondes. L'absorption maximale est atteinte pour une durée d'immersion de 3 minutes. Par contre, la plus petite largeur de pic à mi-hauteur est obtenue pour une durée de 12 minutes.

### Application à la détection d'une molécule acceptrice d'électron

Comme mentionné précédemment, l'une des propriétés des agrégats J est de permettre la circulation extrêmement rapide et, quasiment, sans perte d'énergie, d'un exciton ou d'un électron. Ainsi, si des agrégats J de cyanines sont excités, toutes les molécules de cyanines vont émettre une fluorescence de résonance avec une forte intensité.

La présente application repose sur le fait que, si une molécule acceptrice d'électron est présente dans l'environnement de l'agrégat J, les excitons délocalisés dans l'agrégat J seront rapidement capturés par l'accepteur qui les transformera en paires électron/trou, ce qui aura pour conséquence l'extinction de la fluorescence d'émission.

Des expériences ont été menées avec, comme molécule acceptrice d'électron, du 1,1'-diméthyl-4,4'-bipyridinium, connu sous le nom de paraquat, pour une utilisation en tant qu'herbicide. Le paraquat est également un toxique puissant, s'attaquant notamment au système nerveux central. Il est donc particulièrement important de pouvoir en détecter d'éventuelles traces sur les cultures qui ont été traitées.

Des agrégats J de Myline 1 sont préparés selon le procédé décrit ci-dessus, sur des supports de verre recouverts d'une matrice modèle de PAMAM G4. L'ensemble obtenu est ensuite plongé pendant 1 heure dans des solutions aqueuses de paraquat, à différentes concentrations. Ensuite, les agrégats J sont excités par une source de longueur d'onde à 510nm et les spectres d'émission de fluorescence représentés à la figure 13 sont obtenus. Ils montrent l'intensité d'émission dans une unité arbitraire en fonction de la longueur d'onde, pour:
- a: un échantillon de référence n'ayant pas été au contact de paraquat,
- b: un échantillon ayant été trempé dans une solution de paraquat à 4.10⁻⁴M,
- c: un échantillon ayant été trempé dans une solution de paraquat à 40.10⁻⁶M, et
- d: un échantillon ayant été trempé dans une solution de paraquat à 1.10⁻⁶M.

Ces résultats confirment bien que la présence d'une molécule acceptrice d'électron peut être détectée par une réduction de l'émission de fluorescence d'agrégats J. La réduction de fluorescence observée pour une concentration de 1.10⁻⁶M est d'environ 50%, ce qui permet d'envisager de détecter, avec encore suffisamment de précision, des concentrations beaucoup plus faibles.

### Applications à des dispositifs optiques

Dans le prolongement de ce qui a été mentionné ci-dessus à propos du paraquat, on peut envisager d'intégrer une molécule acceptrice d'énergie directement à l'intérieur même de l'agrégat J. En choisissant un accepteur d'énergie luminescent, dont le spectre d'absorption recouvre, au moins partiellement, le spectre d'émission de l'agrégat, cet accepteur va récolter, avec un certain rendement, l'énergie d'excitation de l'agrégat et réémettre à sa propre longueur d'onde d'émission. Par exemple, un tel accepteur, pouvant convenir pour être incorporé dans un agrégat de molécules de Myline 1, peut être tel que représenté à la figure 14. Une telle molécule a les propriétés nécessaires pour le transfert d'énergie souhaité (maximum d'absorption vers 550 nm, émission vers 600 nm).

Pour obtenir une répartition homogène de l'accepteur dans l'agrégat J, les molécules acceptrices d'énergie sont dissoutes dans la solution-mère de cyanines utilisée pour la formation des agrégats J.

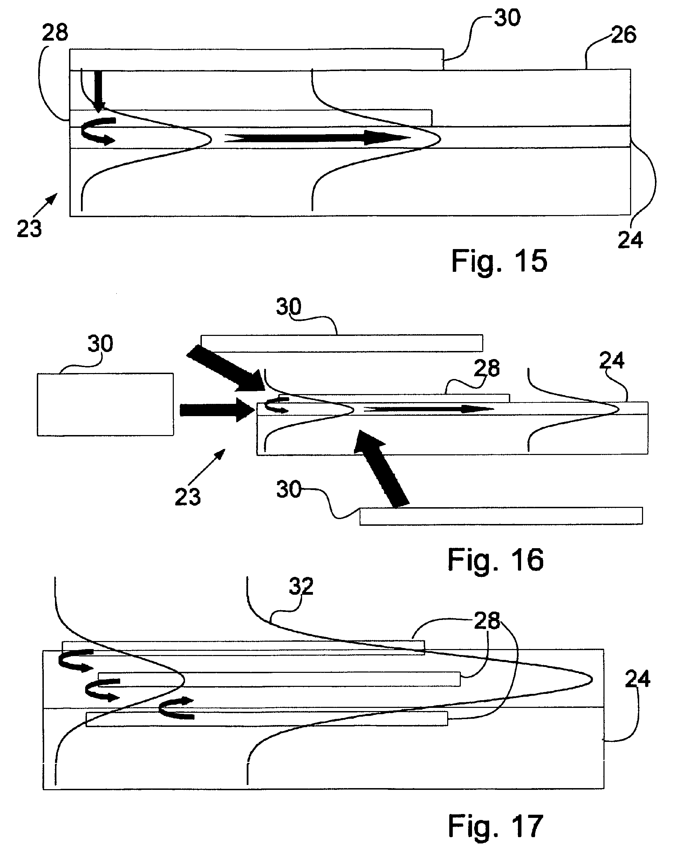

Ce mode d'utilisation des agrégats J peut notamment trouver une application particulièrement intéressante dans des dispositifs comportant des guides d'onde ou d'autres composés optiques. En effet, il peut être souhaitable d'intégrer, dans un tel dispositif, une source de lumière capable d'injecter une onde lumineuse dans le guide d'onde dudit dispositif. Une telle intégration est rendue possible grâce au procédé selon l'invention. Le dispositif ainsi obtenu est représenté à la figure 15. Un guide d'onde 24, par exemple en Ta₂O₅, est réalisé, de manière conventionnelle, dans un substrat en verre 23. Sur le guide d'onde sont ensuite déposées, en utilisant le procédé de l'invention, une couche de dendrimères puis une couche d'agrégats J dans laquelle ont été intégrées des molécules acceptrices d'énergie et luminescentes. Ces couches, ainsi déposées et formant une source de lumière secondaire 28, sont recouvertes par une couche transparente séparatrice 26, par exemple en verre. Enfin, une source de lumière primaire 30 est réalisée sur la couche transparente 26 en regard de la source de lumière secondaire 28. En variante, la couche séparatrice peut être un milieu transparent tel que l'air.

Comme indiqué plus haut, les molécules acceptrices d'énergie sont capables de récolter la lumière reçue, à une première longueur d'onde, de la source primaire 30 et de réémettre, à une deuxième longueur d'onde différente de la première, dans le guide d'onde 24. Dépendant de l'intensité de l'onde excitatrice, l'émission à la deuxième longueur d'onde peut être soit spontanée, soit stimulée. Le dernier cas (effet laser) se produit lorsque l'excitation à la première longueur d'onde est suffisamment intense pour entraîner une inversion de population des accepteurs d'énergie, ce qui veut dire que plus de 50% des accepteurs d'énergie sont excités à tout moment.

Il est particulièrement important que la longueur d'onde d'émission de l'accepteur d'énergie soit suffisamment éloignée de celle d'absorption des agrégats J, pour éviter que la lumière émise par les accepteurs soit absorbée par l'agrégat au lieu d'être conduite par le guide d'onde. Les longueurs d'onde sont, par exemple, séparées d'au moins 20nm, particulièrement d'environ 50 à 70 nm.

Cette source secondaire 28 est destinée à être excitée par une source de lumière primaire 30 qui peut être positionnée de plusieurs manières, comme décrit en détails ci-après.

Dans le dispositif de la figure 15, l'ensemble constitué par le guide d'onde 24 et par la source de lumière secondaire 28 est intégré à l'intérieur d'un dispositif 23. Plus particulièrement, la source secondaire 28 est recouverte d'un séparateur transparent 26, par exemple réalisé en verre, la source primaire 30 étant positionnée directement sur le séparateur 26. Cette source primaire 30 peut être une LED, une OLED ou encore une autre source de lumière connue.

Dans le dispositif de la figure 16, l'ensemble constitué par le guide d'onde 24 et par la source de lumière secondaire 28 constitue la couche supérieure d'un dispositif 23. La source de lumière primaire 30 est située à distance du dispositif et peut être positionnée de manière indifférente par rapport à la source secondaire, comme le montrent les différentes positions illustrées, tant que la lumière qu'elle émet atteint la source secondaire, y compris à travers le substrat et le guide d'onde 24 du dispositif 23.

Enfin, la figure 17 propose différentes variantes de la position de la source de lumière secondaire 28 par rapport au guide d'onde 24. On a représenté en 32 le profil du mode de transmission du guide d'onde. La source secondaire 28 peut être placée n'importe où à l'intérieur du profil de mode. Autrement dit, elle doit être située dans la région où le champ électromagnétique de l'onde guidée est augmenté par le guide d'onde. Il est également possible de combiner plusieurs sources secondaires, situées à des positions différentes, ces différentes sources pouvant absorber et/ou réémettre à différentes longueurs d'onde, selon l'application et les matériaux choisis.

Dans une autre variante non représentée, l'homme du métier peut imaginer que l'accepteur luminescent soit localisé à un endroit précis de l'agrégat J au lieu d'y être réparti de manière homogène. Dans ce cas, lorsqu'un endroit de l'agrégat J est irradié par une source lumineuse, la zone comportant l'accepteur va absorber l'énergie se déplaçant dans l'agrégat et seule cette zone va émettre de la lumière.

Ainsi est proposé un procédé particulièrement simple, permettant d'obtenir des agrégats J de très haute qualité, très stables et pouvant être mis en oeuvre dans des applications industrielles. Notamment, l'invention porte sur l'une de ces applications à des dispositifs optiques. Les techniques décrites ci-dessus ouvrent de larges perspectives en terme d'expérimentation, pour les appliquer à d'autres macromolécules hyperbranches, à d'autres substrats ou à d'autres types de colorants susceptibles de former des agrégats J. La portée de l'invention ne se limite donc pas aux espèces chimiques mentionnées dans les exemples particuliers.

## Revendications

1. Procédé de réalisation d'agrégats J, comprenant les étapes suivantes:
i. se doter d'un support préalablement nettoyé,
ii. déposer sur le support une solution de molécules dendrimères susceptibles d'interagir avec lui pour former une couche présentant, sur sa face externe, une structure régulière et organisée, et
iii. recouvrir l'ensemble obtenu avec une solution de cyanines réagissant avec lesdites molécules dendrimères pour s'auto-arranger en agrégats J.

2. Procédé selon la revendication 1, **caractérisé en ce qu'**il comporte, avant l'étape iii, une étape supplémentaire consistant à charger positivement les molécules dendrimères de la couche disposée sur le support.

3. Procédé selon la revendication 2, **caractérisé en ce que** ladite étape supplémentaire consiste à protonner les molécules dendrimères par une réaction en milieu acide.

4. Procédé selon l'une des revendications 1 à 3, **caractérisé en ce qu'**il comprend, après l'étape ii, une étape de rinçage pour éliminer les molécules dendrimères n'ayant pas adhéré au support.

5. Procédé selon l'une des revendications 1 à 4, **caractérisé en ce qu'**il comprend, après l'étape iii, une étape de rinçage pour éliminer les cyanines n'ayant pas réagi avec les molécules dendrimères.

6. Procédé selon l'une des revendications 1 à 5, **caractérisé en ce que** le support est réalisé en un matériau capable d'interagir avec lesdites molécules dendrimères pour permettre la création d'une couche organisée de ces molécules dendrimères.

7. Procédé selon la revendication 6, **caractérisé en ce que** ledit matériau est choisi parmi le verre, l'or, le silicium, le quartz, des oxydes métalliques et des polymères.

8. Procédé selon l'une des revendications 1 à 7, **caractérisé en ce que** lesdits dendrimères sont du Polyamidoamide (PAMAM), avantageusement de génération 1 à 10, de préférence de génération 4 à 10.

9. Procédé selon l'une des revendications 1 à 8, **caractérisé en ce que** les cyanines sont des Mylines.

10. Procédé selon l'une des revendications 1 à 9, **caractérisé en ce que** l'étape iii du procédé dure entre 5 secondes et 1 heure.

11. Procédé selon l'une des revendications 1 à 10, **caractérisé en ce que** la solution de l'étape iii est à température ambiante.

12. Procédé selon l'une des revendications 1 à 11, **caractérisé en ce que** la solution de l'étape iii comporte, également en solution, des accepteurs d'électrons.

13. Procédé selon l'une des revendications 1 à 11, **caractérisé en ce que** la solution de l'étape iii comporte, également en solution, des accepteurs d'énergie.

14. Utilisation d'un ensemble formé d'un support et d'une couche organisée de molécules dendrimères disposée sur le support, pour être recouvert d'agrégats J obtenus selon le procédé de l'une des revendications 1 à 13.

15. Ensemble formé d'un support, d'une couche organisée de molécules dendrimères et, sur la couche organisée de ces molécules, une monocouche de molécules de la famille des cyanines organisées en agrégats J.

16. Ensemble selon la revendication 15, **caractérisé en ce que** le support est réalisé en un matériau choisi parmi le verre, l'or, le silicium, le quartz, des oxydes métalliques et des polymères.

17. Ensemble selon la revendication 16, **caractérisé en ce que** lesdits dendrimères sont du Polyamidoamide (PAMAM), avantageusement de génération 1 à 10, de préférence de génération 4 à 10.

18. Ensemble selon l'une des revendications 15 à 17, **caractérisé en ce que** les cyanines sont des Mylines.

19. Ensemble selon l'une des revendications 15 à 18, **caractérisé en ce que** ladite monocouche de molécules de la famille des cyanines organisées en agrégats J comporte des accepteurs d'électrons.

20. Ensemble selon l'une des revendications 15 à 18, **caractérisé en ce que** ladite monocouche de molécules de la famille des cyanines organisées en agrégats J comporte des accepteurs d'énergie

21. Ensemble selon la revendication 20, **caractérisé en ce que** lesdits accepteurs d'énergie sont luminescents.

22. Ensemble selon la revendication 20 ou la revendication 21, dans lequel ladite monocouche de molécules de la famille des cyanines organisées en agrégats J absorbe de l'énergie à une première longueur d'onde, **caractérisé en ce que** lesdits accepteurs émettent de l'énergie à une deuxième longueur d'onde distante d'au moins 20 nm.

23. Utilisation de solution de cyanines comportant des germes d'agrégats J dans le procédé selon l'une des revendications 1 à 13.

24. Utilisation selon la revendication 23, **caractérisée en ce que** ladite solution comporte, en outre, des accepteurs d'électrons.

25. Utilisation selon la revendication 23, **caractérisée en ce que** ladite solution comporte, en outre, des accepteurs d'énergie.

26. Dispositif optique comprenant un guide d'onde, **caractérisé en ce qu'**il comporte une première source de lumière formée d'un ensemble selon la revendication 22 et disposée dans la région où le champ électromagnétique de l'onde guidée est augmenté par le guide d'onde.

27. Dispositif selon la revendication 26, **caractérisé en ce que** le guide d'onde est le substrat dudit ensemble.

28. Dispositif optique selon l'une des revendications 26 et 27, **caractérisé en ce qu'**il comporte, en outre, une deuxième source de lumière émettant à ladite première longueur d'onde et disposée de manière à irradier ladite première source.

## Claims

1. A method for making J aggregates, comprising the following steps:
i providing a support cleaned beforehand,
ii. depositing on the support, a solution of dendrimer molecules capable of interacting with it in order to form a monolayer having on its outer face, a regular and organized structure, and
iii. covering the obtained assembly with a solution of cyanines reacting with said dendrimer molecules in order to be self-arranged in J aggregates.

2. The method according to claim 1, **characterized in that** it includes, before step iii, an additional step consisting of positively charging the dendrimer molecules of the layer positioned on the support.

3. The method according to claim 2, **characterized in that** said additional step consists of protonating the dendrimer molecules by a reaction in an acid medium.

4. The method according to any of claims 1 to 3, **characterized in that** it comprises, after step ii, a rinsing step for removing the dendrimer molecules which have not adhered to the support.

5. The method according to any of claims 1 to 4, **characterized in that** it comprises after step iii, a rinsing step for removing the cyanines which have not reacted with the dendrimer molecules.

6. The method according to any of claims 1 to 5, **characterized in that** the support is made in a material capable of interacting with said dendrimer molecules in order to allow generation of an organized layer of these dendrimer molecules.

7. The method according to claim 6, **characterized in that** said material is selected from glass, gold, silicon, quartz, metal oxides and polymers.

8. The method according to any of claims 1 to 7, **characterized in that** said dendrimers are polyamido-amides (PAMAM), advantageously of generation 1 to 10, preferably of generation 4 to 10.

9. The method according to any of claims 1 to 8, **characterized in that** the cyanines are Mylines.

10. The method according to any of claims 1 to 9, **characterized in that** step iii of the method lasts for between 5 seconds and 1 hour.

11. The method according to any of claims 1 to 10, **characterized in that** the solution of step iii is at room temperature.

12. The method according to any of claims 1 to 11, **characterized in that** the solution of step iii includes, also in solution, electron acceptors.

13. The method according to any of claims 1 to 11, **characterized in that** the solution of step iii includes, also in solution, energy acceptors.

14. The use of an assembly formed with a support and an organized layer of dendrimer molecules positioned on the support, in order to be covered with J aggregates obtained according to the method of any of claims 1 to 13.

15. An assembly formed with a support, an organized layer of dendrimer molecules and on the organized layers of these molecules, a monolayer of molecules from the family of cyanines organized as J aggregates.

16. The assembly according to claim 15, **characterized in that** the support is made on a material selected from glass, gold, silicon, quartz, metal oxides and polymers.

17. The assembly according to claim 16, **characterized in that** said dendrimers are polyamido-amides (PAMAM), advantageously of generation 1 to 10, preferably of generation 4 to 10.

18. The assembly according to any of claims 15 to 17, **characterized in that** the cyanines are Mylines.

19. The assembly according to any of claims 15 to 18, **characterized in that** said monolayer of molecules from the family of cyanines organized as J aggregates includes electron acceptors.

20. The assembly according any of claims 15 to 18, **characterized in that** said monolayer of molecules from the family of cyanines organized as J aggregates includes energy acceptors.

21. The assembly according to claim 20, **characterized in that** said energy acceptors are luminescent.

22. The assembly according to claim 20 or claim 21, wherein said monolayer of molecules from the family of cyanines organized as J aggregates absorbs energy at a first wavelength, **characterized in that** said acceptors emit energy at a second wavelength distant by at least 20nm.

23. The use of a solution of cyanines including germs of J aggregates in the method according to any of claims 1 to 13.

24. The use according to claim 23, **characterized in that** said solution further includes electron acceptors.

25. The use according to claim 23, **characterized in that** said solution further includes energy acceptors.

26. An optical device comprising a waveguide, **characterized in that** it includes a first light source formed with an assembly according to claim 22 and positioned in the region where the electromagnetic field of the guided wave is increased by the waveguide.

27. The device according to claim 26, **characterized in that** the waveguide is the substrate of said assembly.

28. The optical device according to any of claims 26 and 27, **characterized in that** it further includes a second light source emitting at said first wavelength and positioned so as to irradiate said first source.

## Patentansprüche

1. Verfahren zur Herstellung von J-Aggregaten, das die folgenden Schritte umfasst:
i. Bereitstellen einer zuvor gereinigten Unterlage,
ii. Aufbringen einer Lösung von Dendrimer-Molekülen auf der Unterlage, die imstande sind, mit ihr zu interagieren, um eine Schicht zu bilden, die auf ihrer Außenseite eine gleichförmige und organisierte Struktur aufweist, und
iii. Bedecken der hergestellten Gruppe mit einer Lösung aus Cyaninen, die mit den Dendrimer-Molekülen reagieren, um sich selbst zu J-Aggregaten zu organisieren.

2. Verfahren nach Anspruch 1, **dadurch gekennzeichnet, dass** es vor dem Schritt iii einen zusätzlichen Schritt aufweist, der darin besteht, die Dendrimer-Moleküle der auf der Unterlage angeordneten Schicht positiv zu laden.

3. Verfahren nach Anspruch 2, **dadurch gekennzeichnet, dass** der zusätzliche Schritt darin besteht, die Dendrimer-Moleküle durch eine Reaktion in saurem Milieu zu protonieren.

4. Verfahren nach einem der Ansprüche 1 bis 3, **dadurch gekennzeichnet, dass** es nach dem Schritt ii einen Reinigungsschritt umfasst, um die Dendrimer-Moleküle zu entfernen, die sich nicht auf der Unterlage angelagert haben.

5. Verfahren nach einem der Ansprüche 1 bis 4, **dadurch gekennzeichnet, dass** es nach dem Schritt iii einen Reinigungsschritt umfasst, um die Cyanine zu entfernen, die nicht mit den Dendrimer-Molekülen reagiert haben.

6. Verfahren nach einem der Ansprüche 1 bis 5, **dadurch gekennzeichnet, dass** die Unterlage aus einem Werkstoff hergestellt ist, der imstande ist, mit den Dendrimer-Molekülen zu interagieren, um die Bildung einer organisierten Schicht dieser Dendrimer-Moleküle zu erlauben.

7. Verfahren nach Anspruch 6, **dadurch gekennzeichnet, dass** der Werkstoff aus dem Glas, dem Gold, dem Silizium, dem Quarz, den Metalloxiden und den Polymeren ausgewählt ist.

8. Verfahren nach einem der Ansprüche 1 bis 7, **dadurch gekennzeichnet, dass** die Dendrimere Polyamidoamid (PAMAM), in vorteilhafter Weise der Generation 1 bis 10, vorzugsweise der Generation 4 bis 10, sind.

9. Verfahren nach einem der Ansprüche 1 bis 8, **dadurch gekennzeichnet, dass** die Cyanine Myline sind.

10. Verfahren nach einem der Ansprüche 1 bis 9, **dadurch gekennzeichnet, dass** der Schritt iii des Verfahrens zwischen 5 Sekunden und 1 Stunde dauert.

11. Verfahren nach einem der Ansprüche 1 bis 10, **dadurch gekennzeichnet, dass** die Lösung des Schritts iii Umgebungstemperatur hat.

12. Verfahren nach einem der Ansprüche 1 bis 11, **dadurch gekennzeichnet, dass** die Lösung des Schritts iii, ebenfalls in Lösung, Elektronenakzeptoren umfasst.

13. Verfahren nach einem der Ansprüche 1 bis 11, **dadurch gekennzeichnet, dass** die Lösung des Schritts iii, ebenfalls in Lösung, Energieakzeptoren umfasst.

14. Verwendung einer Gruppe, die von einer Unterlage und einer auf der Unterlage angeordneten organisierten Dendrimer-Molekülschicht gebildet wird, um von J-Aggregaten bedeckt zu sein, die nach dem Verfahren einer der Ansprüche 1 bis 13 hergestellt wurden.

15. Gruppe, die von einer Unterlage, einer organisierten Dendrimer-Molekülschicht und, auf der organisierten Schicht dieser Moleküle, einer Monoschicht von Molekülen aus der Familie der in J-Aggregaten organisierten Cyanine gebildet wird.

16. Gruppe nach Anspruch 15, **dadurch gekennzeichnet, dass** die Unterlage aus einem Werkstoff hergestellt ist, der aus dem Glas, dem Gold, dem Silizium, dem Quarz, den Metalloxiden und den Polymeren ausgewählt ist.

17. Gruppe nach Anspruch 16, **dadurch gekennzeichnet, dass** die Dendrimere Polyamidoamid (PAMAM), in vorteilhafter Weise der Generation 1 bis 10, vorzugsweise der Generation 4 bis 10, sind.

18. Gruppe nach einem der Ansprüche 15 bis 17, **dadurch gekennzeichnet, dass** die Cyanine Myline sind.

19. Gruppe nach einem der Ansprüche 15 bis 18, **dadurch gekennzeichnet, dass** die Monoschicht der in J-Aggregaten organisierten Moleküle aus der Familie Cyanine Elektronenakzeptoren aufweist.

20. Gruppe nach einem der Ansprüche 15 bis 18, **dadurch gekennzeichnet, dass** die Monoschicht der in J-Aggregaten organisierten Moleküle aus der Familie Cyanine Energieakzeptoren aufweist.

21. Gruppe nach Anspruch 20, **dadurch gekennzeichnet, dass** die Energieakzeptoren lumineszierend sind.

22. Gruppe nach Anspruch 20 oder nach Anspruch 21, wobei die Monoschicht der in J-Aggregaten organisierten Moleküle aus der Familie Cyanine Energie in einer ersten Wellenlänge absorbiert, **dadurch gekennzeichnet, dass** die Akzeptoren Energie in einer zweiten, mindestens 20 nm entfernten Wellenlänge aussenden.

23. Verwendung einer Cyaninlösung, die Keime von J-Aggregaten umfasst, im Verfahren nach einem der Ansprüche 1 bis 13.

24. Verwendung nach Anspruch 23, **dadurch gekennzeichnet, dass** die Lösung weiterhin Elektronenakzeptoren aufweist.

25. Verwendung nach Anspruch 23, **dadurch gekennzeichnet, dass** die Lösung weiterhin Energieakzeptoren aufweist.

26. Optische Vorrichtung, die einen Wellenleiter umfasst, **dadurch gekennzeichnet, dass** sie eine erste Lichtquelle aufweist, die von einer Gruppe nach Anspruch 22 gebildet wird und in der Region angeordnet ist, wo das elektromagnetische Feld der geleiteten Welle von dem Wellenleiter verstärkt wird.

27. Vorrichtung nach Anspruch 26, **dadurch gekennzeichnet, dass** der Wellenleiter das Substrat der Gruppe ist.

28. Optische Vorrichtung nach einem der Ansprüche 26 und 27, **dadurch gekennzeichnet, dass** sie eine zweite Lichtquelle aufweist, die die erste Wellenlänge aussendet und derart angeordnet ist, dass die erste Quelle bestrahlt wird.
